# EUROPÄISCHE PATENTSCHRIFT

(11) **EP 1 744 835 B1**
(45) Veröffentlichungstag und Bekanntmachung des Hinweises auf die Patenterteilung: **15.06.2011**
(21) Anmeldenummer: 05729869.7
(22) Anmeldetag: 01.04.2005
(51) Int. Cl.: B05C 1/04, B32B 37/15, B32B 38/18, B05C 5/02, B05C 11/02, B05C 21/00, B05D 5/10, B05D 1/04, B05D 1/26

(54) **VERFAHREN ZUM AUFTRAGEN EINES FILMS AUF EIN FLÄCHIGES SUBSTRAT, UMLENKELEMENT UND VORRICHTUNG ZUM AUFTRAGEN EINES FILMS AUF EIN FLÄCHIGES SUBSTRAT**
METHOD FOR APPLYING A FILM TO A PLANAR SUBSTRATE, DEFLECTING ELEMENT AND DEVICE FOR APPLYING A FILM TO A PLANAR SUBSTRATE
PROCEDE POUR APPLIQUER UN FILM SUR UN SUBSTRAT PLAT, ELEMENT DE RENVOI ET DISPOSITIF POUR APPLIQUER UN FILM SUR UN SUBSTRAT PLAT

(30) Priorität: 16.04.2004 DE 102004019048
(43) Veröffentlichungstag der Anmeldung: 24.01.2007
(73) Patentinhaber: NORDSON CORPORATION, Westlake, OH 44145-1119 (US)
(72) Erfinder: STECKELBERG, Juergen, 21354 Bleckede, Walmsburg (DE); BROCKMANN, Gerd, 21337 Lueneburg (DE)
(74) Vertreter: Eisenführ, Speiser & Partner
(86) Internationale Anmeldenummer: PCT/EP2005/003444
(87) Internationale Veröffentlichungsnummer: WO 2005/099911

(56) Entgegenhaltungen:
- EP-A- 0 764 521
- EP-A- 0 875 298
- US-A- 3 196 063
- US-A- 3 788 271
- US-A- 5 591 496
- US-A1- 2002 090 463

## Beschreibung

Die Erfindung betrifft ein Verfahren zum Auftragen eines Films auf ein flächiges, insbesondere luftundurchlässiges Substrat. Die Erfindung betrifft des Weiteren ein Umlenkelement zum Umlenken eines flächigen, insbesondere luftundurchlässigen Substrats mit mindestens einer zum Führen eines flächigen Substrats ausgebildeten Führungsfläche und einer weiteren, mit der Führungsfläche eine Kante zum Umlenken eines flächigen Substrats einschließende Führungsfläche. Gemäß eines weiteren Aspekts betrifft die Erfindung eine Vorrichtung zum Auftragen eines Films auf ein flächiges, insbesondere luftundurchlässiges Substrat mit einem Zuführelement zum Zuführen des flächigen Substrats und einer Auftragsvorrichtung zum Auftragen eines Films. Schließlich betrifft die Erfindung die Verwendung eines Umlenkelements.

Bei der Herstellung von einer Vielzahl flächiger Produkttypen wie beispielsweise Klebebändern, Schutzfolien, etc. wird auf ein flächiges Substrat, beispielsweise eine transparente Kunststofffolie, ein Klebstofffilm aufgebracht. Der Klebstoff wird dazu in flüssiger Form einer Auftragsvorrichtung zugeführt, verlässt diese als zusammenhängender Film und wird in dieser Form auf das Substrat aufgebracht. Die Herstellung der Produkte ist dabei um so preiswerter, je höher die Verarbeitungsgeschwindigkeit gewählt werden kann, mit welcher der Klebstofffilm auf das Substrat aufgebracht wird.

Es hat sich dabei gezeigt, dass es beim Aufbringen des Klebstoffs bei allen, insbesondere bei hohen Verarbeitungsgeschwindigkeiten vermehrt zur Bildung von Lufteinschlüssen kommt. Unter der Bildung eines Lufteinschlusses wird der Effekt verstanden, dass sich zwischen dem Substrat und dem Klebstofffilm Luftblasen bilden. Derartige Lufteinschlüsse werden vom Kunden als Fabrikationsfehler aufgefasst und mindern daher die Qualität der hergestellten Produkte. Sie erschweren darüberhinaus die weitere Verarbeitung der mit dem Klebstofffilm versehenden Substrate, wie beispielsweise das Aufrollen. US 3,196,063 beschreibt das Aufbringen eines flächigen Films auf ein Substrat im Bereich einer Umlenkrolle. Das Substrat wird dabei um die Umlenkrolle herumgeführt.

US 2002/0090463 A1 beschreibt ein Beschichtungsverfahren bei dem eine Bahn mittels eines Luftlagers im Bereich zwischen zwei Umlenkrollen stabilisiert wird. Vibrationen der Bahn sollen minimiert werden durch aus einer Lageroberfläche herausströmende Luft.

Es ist Aufgabe der vorliegenden Erfindung, die Bildung von Lufteinschlüssen zu vermeiden oder zumindest zu verringern, vorzugsweise auch bei hohen Verarbeitungsgeschwindigkeiten.

Die Aufgabe wird erfindungsgemäß gelöst durch ein Verfahren mit den Merkmalen des Anspruchs 1.

Zum scharfen Umlenken wird erfindungsgemäß vorzugsweise ein Umlenkelement der oben genannten Art verwendet, bei dem sich durch das Umlenkelement mindestens ein Druckluftkanal zur Kante erstreckt, der in mindestens eine Austrittsöffnung im Bereich der Kante ausläuft, die so ausgebildet ist, dass aus dieser ausströmende Druckluft ein um die Kante verlaufendes Luftkissen bildet.

Gemäß eines weiteren Aspektes wird die Aufgabe gelöst durch ein Umlenkelement gemäß Anspruch 11 zum Umlenken eines insbesondere luftundurchlässigen flächigen Substrats mit mindestens einer zum Führen eines flächigen Substrats ausgebildeten Führungsfläche und einer weiteren, mit der Führungsfläche eine Kante zum Umlenken eines flächigen Substrats einschließende Führungsfläche, bei dem die beiden Führungsflächen so winklig zueinander angeordnet sind, dass das Substrat während seiner Bewegung entlang der beiden Führungsflächen scharf umgelenkt wird.

Das flächige Substrat im Umlenkbereich an der Kante mittels eines Luftkissens beeinflusst. Beim Umlenken an der Kante wirkt eine Kraft auf das Substrat. Diese Kraft wirkt senkrecht auf das Bauteil, an dem die Umlenkung stattfindet, sodass es zu Reibung kommt. Um die Belastung des Substrats möglichst gering zu halten, ist es wichtig, die Reibung möglichst gering zu halten. Durch Beeinflussen des flächigen Substrats im Umlenkbereich an der Kante mittels eines Luftkissens kann die Reibung deutlich reduziert werden, was das flächige Substrat sowohl hinsichtlich mechanischer, als auch thermischer Einflüsse schont. Wird das Luftkissen aus kalter Luft gebildet, so wird das flächige Substrat zusätzlich im Umlenkbereich gekühlt. Das ist insbesondere dann vorteilhaft, wenn als Film ein Heißklebstofffilm aufgetragen wird. Im Umlenkbereich kommt das flächige Substrat dann in innigen Kontakt mit dem Heißklebstofffilm, wodurch es thermisch belastet wird. Diese thermische Belastung wird durch ein Luftkissen aus gekühlter Luft gemindert.

Das Substrat wird so mittels des Luftkissens beeinflusst, dass es mit der Kante nicht in unmittelbaren Kontakt gelangt. In diesem Fall kommt es nicht zu Festkörperreibung zwischen dem flächigen Substrat und dem umlenkenden Bauteil, sondern lediglich zu Fluidreibung zwischen flächigem Substrat und Luftkissen, sowie dem umlenkenden Bauteil und dem Luftkissen. Eine derartige Fluidreibung ist deutlich schwächer ausgeprägt als eine Festkörperreibung zwischen flächigem Substrat und dem umlenkenden Bauteil, so dass thermische und mechanische Belastungen vermindert werden.

Die Beeinflussung des flächigen Substrats im Umlenkbereich mittels eines Luftkissens erfolgt insbesondere dadurch, dass durch Luft, welche aus Austrittsöffnungen im Bereich der Kante austritt, ein Luftkissen zwischen der Kante und gegebenenfalls einem Bereich um die Kante herum einerseits und des Substrats andererseits gebildet wird. Die das Luftkissen bildende Luft sollte dabei unter mindestens einem solchen Druck stehen, dass die durch die Zuführung und Umlenkung des Substrats auf die Kante und den Kantenbereich ausgeübte Anpresskraft überwunden wird und eine möglichst vollständige Trennung des Substrats von der Kante und dem Kantenbereich erreicht wird.

Vorteilhafte Ausführungsformen der Erfindung sind in den Unteransprüchen angegeben.

Zur Ausführung des erfindungsgemäßen Verfahrens wird vorzugsweise eine Vorrichtung der eingangs genannten Art verwendet, die ein derartiges Umlenkelement umfasst. Schließlich wird die Aufgabe gelöst durch die Verwendung eines Umlenkelements der eingangs genannten Art zum Umlenken einer Substratbahn in einer Vorrichtung zum Auftragen eines Films auf die Substratbahn.

Unter einem Film wird eine zusammenhängende, jedoch nicht notwendigerweise homogene Materialschicht verstanden, die von der Auftragsvorrichtung abgegeben wird. Beispiele hierfür sind dünne Heißklebstoffschichten, Folien oder Klebebänder. Als von der Auftragsvorrichtung abgegeben wird der Film auch betrachtet, wenn die Auftragsvorrichtung eine oder mehrere Substanzen abgibt, der/die auf dem Weg zum Substrat einen Film bilden.

Das Auftragen des Films auf das flächige Substrat erfolgt erfindungsgemäß vorzugsweise so, dass der Film zeitlich vor dem scharfen Umlenken des flächigen Substrats in unmittelbarer Nähe des Substrats von der Auftragsvorrichtung abgegeben wird und zunächst eng benachbart zu dem Substrat verläuft. Der abgegebene Film und das Substrat werden dann im Umlenkbereich in unmittelbaren Kontakt gebracht, so dass eine Haftung zwischen Film und Substrat erfolgt. Nach dem Umlenkbereich befindet sich der Film als Schicht auf dem Substrat und ist mit diesem verbunden. Auf diese Weise wird durch das zugeführte flächige Substrat eine Abzugswirkung auf den von der Auftragsvorrichtung abgegebenen Film ausgeübt und durch die Zuführgeschwindigkeit des flächigen Substrats und die Abgabegeschwindigkeit des Films aus der Auftragsvorrichtung ist die Filmstärke veränderbar.

Unter scharfem Umlenken soll in diesem Zusammenhang eine Richtungsänderung des Substrats verstanden werden, die hinsichtlich des Umlenkwinkels, des Umlenkradius und der Zuführgeschwindigkeit eine derartige Umlenkung erzielt, dass eine im Verhältnis zur Substratdicke auf kleinem Raum stattfindende Umlenkung erzielt wird. Einen wesentlichen Einfluss darauf, dass die erforderliche scharfe Umlenkung erreicht wird, hat der Umlenkwinkel, der möglichst spitz sein sollte. Der Umlenkwinkel nähert sich idealerweise 180° an, d. h. die Bewegungsrichtung des Substrats ändert sich um 180°, jedoch wird ein derart spitzer Winkel praktisch nicht umsetzbar sein, da technisch gebräuchliche Substrate eine derart starke Umlenkung bei üblichen Umlenkradien nicht unbeschadet überstehen und ein Reißen oder zumindest teilweises Beschädigen des Substrats zu befürchten ist. Einen weiteren großen Einfluss auf das Erzielen eines scharfen Umlenkens hat der Umlenkradius, der möglichst klein gewählt werden sollte. Auch hier wird die Verringerung des Umlenkradius durch die Gefahr des Beschädigens des Substrates begrenzt. Umlenkradius und Umlenkwinkel hängen in gewissem Ausmaß zusammen, d. h. bei der Wahl eines kleinen Umlenkwinkels kann ein kleinerer Umlenkradius gewählt werden als dann, wenn ein größerer Umlenkwinkel gewählt wird. Umgekehrt muss bei einem kleinen Umlenkradius ein größerer Umlenkwinkel gewählt werden als bei einem größeren Umlenkradius. Schließlich steht als dritter Einflussfaktor die Zuführgeschwindigkeit des Substrats im Zusammenhang mit dem zu wählenden Umlenkradius und dem zu wählenden Umlenkwinkel, um ein scharfes Umlenken zu erzielen. Je höher die Geschwindigkeit des flächigen Substrats im Umlenkbereich ist, desto größer muss der Umlenkwinkel und desto kleiner muss der Umlenkradius gewählt werden, um den mit der Erfindung erzielten Effekt zu erreichen.

Unter dem Umlenkbereich wird dabei der kleinste Bereich im Substratlaufpfad verstanden, der sich hinter der Beschichtungsvorrichtung befindet und in dessen unmittelbar anschließender Umgebung sich das Substrat in einer translatorischen Bewegung bewegt. Es handelt sich somit um den Bereich, in dem das Umlenken stattfindet und in dem sich der Krümmungsradius des Substratlaufpfads stark von den Krümmungsradien in den angrenzenden Bereichen unterscheidet. Der Substratlaufpfad ist der Pfad, den ein Teil des Substrats während des Verfahrens zurücklegt.

Die Erfindung bietet den Vorteil, dass die Wahrscheinlichkeit von Lufteinschlüssen beim Auftragen eines Films auf ein flächiges Substrat deutlich reduziert wird. Durch das scharfe Umlenken wird Luft, die sich möglicherweise noch zwischen dem Substrat und dem Film befindet, aus diesem Zwischenbereich herausgedrückt und/oder herausgesogen, so dass diese Luft keine Lufteinschlüsse bilden kann.

Vorteilhaft ist insbesondere, dass die Verringerung der Lufteinschlüsse auch bei hohen bis sehr hohen Zuführgeschwindigkeiten und den damit erzielbaren hohen Verarbeitungsgeschwindigkeiten erreicht wird. Die Verringerung der Lufteinschlüsse wird dabei auch dann erreicht, wenn sowohl das Substrat als auch der Film luftundurchlässig sind; in einem solchen. Fall könnten selbst kleinste Luftmengen nach dem Aufbringen des Films nicht mehr entweichen.

Unter einer hohen Verarbeitungsgeschwindigkeit werden solche oberhalb von 150 m/min verstanden; unter einer sehr hohen Verarbeitungsgeschwindigkeit solche über 500 m/min.

Ein weiterer Vorteil der Erfindung ist die hohe Prozesssicherheit. Bei Anlagen, die kontinuierlich betrieben werden, führen Produktionsunterbrechungen zu beträchtlichen Kosten. Die hohe Prozesssicherheit trägt damit auch zu geringeren Kosten bei.

In einer bevorzugten Ausführungsform wird das scharfe Umlenken des flächigen Substrats dadurch erzielt, dass der Krümmungsradius des flächigen Substrats auf der dem Film zugewandten Seite im Umlenkbereich kleiner ist als 8mm. Der Krümmungsradius wird dabei durch einen Ausgleichskreis berechnet, der in die Kontur des Substrats im Umlenkbereich eingeschrieben wird. Durch den kleinen Krümmungsradius entsteht im Umlenkbereich ein im Vergleich zu bisherigen Verfahren großer Winkel zwischen dem Substrat und dem mit dem Substrat in Kontakt gebrachten Film. Durch diesen großen Winkel wird die Luft, die sich in diesem Bereich befindet, aus dem Bereich herausgedrängt, in dem der Film in unmittelbaren, d. h. körperlichen Kontakt mit dem Substrat gerät. So wird die Wahrscheinlichkeit von Lufteinschlüssen stark verringert.

Besonders bevorzugt ist, dass der Krümmungsradius kleiner ist als 6 mm, insbesondere kleiner als 4 mm. Je kleiner der Krümmungsradius ist, desto effektiver wird die Luft aus dem Bereich zwischen Substrat und Film verdrängt und umso geringer ist damit die Wahrscheinlichkeit von Lufteinschlüssen. Unter diesem Gesichtspunkt sind somit möglichst kleine Krümmungsradien anzustreben. Andererseits ist die Belastung des Substrats dann umso größer, je kleiner der Krümmungsradius ist. Insbesondere steigt die Gefahr von Rissen oder Falten. Für jedes Substrat und jeden Film ist damit im Rahmen einer Versuchsreihe zu ermitteln, wie klein der Krümmungsradius bei einer gegebenen Verarbeitungsgeschwindigkeit gewählt werden kann, damit es nicht zu Schädigungen des Substrats kommt.

Vorzugweise wird das Umlenken des flächigen Substrats durch Bewegen, insbesondere Ziehen des Flächensubstrats über eine Kante bewirkt. Eine Kante gestattet die Ausprägung eines kleinen Krümmungsradius mit konstruktiv einfachen Mitteln. Gleichzeitig wird so ein steifer Aufbau erreicht, der Schwingungen vermindert.

Bevorzugt ist, dass das Umlenken des flächigen Substrats durch Bewegen, insbesondere Ziehen des Flächensubstrats über eine Kante bewirkt wird, deren Krümmungsradius kleiner ist als 3 mm, insbesondere 2 mm, vermindert um die Dicke des Substrats

Vorzugsweise handelt es sich bei dem flächigen Substrat um eine transparente Folie. Bei transparenten Folien fallen Lufteinschlüsse besonderes schnell ins Auge. Aus diesem Grund ist der Einsatz des erfindungsgemäßen, Lufteinschlüsse vermindernden Verfahrens besonders günstig.

In einer bevorzugten Ausführungsform des Verfahrens wird der Film an einem Ort in unmittelbare Nähe zu dem flächigen Substrat gebracht, der einen Abstand von 0-20 mm, insbesondere 1-10 mm vom Umlenkbereich hat. Beim Auftragen des Films auf das flächige Substrat und dem nachfolgenden Umlenken des Substrats kommt es zur Ausbildung einer Adhäsivkraft zwischen beiden Partnern, aufgrund derer sie letztlich aufeinander haften. Dabei wird Luft, die sich im Bereich zwischen Film und Substrat befindet, aus diesem Bereich u.a. durch dynamisch erzeugte lokale Luftdruckänderungen verdrängt. Wird der Abstand zwischen dem Ort, in dem der Film in unmittelbare Nähe zu dem Flächensubstrat kommt, und dem Umlenkbereich zu klein gewählt, verbleibt der Luft nicht genügend Zeit, um diesen Bereich zu verlassen. Ist der Abstand zu groß gewählt, besteht die Gefahr, dass Film und Substrat bereits vor dem Umlenken aneinander haften, so dass beim folgenden scharfen Umlenken die Luft am Entweichen gehindert wird und sich Lufteinschlüsse ausbilden können.

Bevorzugt ist ein Verfahren, bei dem die scharfe Umlenkung des Substrats dadurch erzielt wird, dass der zwischen Zuführrichtung und -abführrichtung in der Umgebung des Umlenkbereichs eingeschlossene Winkel 40°-110°(entspricht einem Umlenkwinkel, von 140°-70°), insbesondere 50°-80° (entspricht einem Umlenkwinkel von 130°-100°), insbesondere 55°-65° (entspricht einem Umlenkwinkel von 125°-115°) beträgt. Je geringer der eingeschlossene Winkel ist, umso höher ist die Wahrscheinlichkeit, das Lufteinschlüsse vermieden werden. Mit abnehmendem Winkel steigt jedoch auch die Belastung des Substrats. Es ist damit für jedes Substrat, jeden Film und jede Verarbeitung-Geschwindigkeit in Vorversuchen zu ermitteln, wie klein dieser eingeschlossene Winkel gewählt werden kann, ohne dass es zu Schädigungen des Substrats kommt.

Bevorzugt ist, dass das flächige Substrat als Substratbahn zugeführt wird. In diesem Fall kann das Verfahren zum Auftragen des Films als kontinuierlicher Prozess durchgeführt werden. Da hierbei etwaige Anlaufprobleme des Verfahrens weitgehend vermieden werden, insbesondere nur einmal beim starten des Prozesses auftreten, ist auf diese Art und Weise eine besonders effiziente und damit kostengünstige Produktion möglich.

In einer bevorzugten Ausführungsform wird das Substrat zunächst auf einer, vorzugsweise gekühlten, Leitwalze geführt, anschließend von der Leitwalze entlang einer Umlenkwalze mit im Vergleich zur Leitwalze kleinerem Durchmesser von der Leitwalze weg auf die Auftragvorrichtung zu und nach dem Umlenken auf die Leitwalze zurückgeführt. In diesem Fall wird die Geschwindigkeit, mit der der Film auf das flächige Substrat aufgetragen wird, durch die Drehgeschwindigkeit der Leitwalze bestimmt. Zusätzlich ist die Spannung des Substrats, und damit die Spannung, die im Umlenkbereich am Substrat anliegt, durch Regelung des Abstands zwischen dem Umlenkprozess und der Leitwalze sehr sensibel einstellbar. Bei hitzeempfindlichen Substraten werden dadurch, dass die Leitwalze und/oder das Umlenkelement gekühlt sind, thermische Schäden vermindert oder verhindert.

In einer bevorzugten Ausführungsform ist vorgesehen, dass das flächige Substrat im Umlenkbereich einem elektrostatischen Feld ausgesetzt wird, das an mindestens einer Stelle im Umlenkbereich eine Feldstärke von mehr als 5 kV/m aufweist. Versuche haben gezeigt, dass ein derartiges elektrostatisches Feld die Neigung zu Lufteinschlüssen zusätzlich verringert. Durch die Krümmung des Umlenkelements im Bereich der Kante wird eine vorteilhafte Verstärkung der Feldstärke im Umlenkbereich erzielt, da es zu einer Konzentration der Feldlinien kommt. Eine solche Feldverstärkung kann auch durch eine Verringerung des Abstands zwischen Elektrode und Umlenkelement erzielt werden.

Bevorzugt ist ein Umlenkelement, das eine Kante mit einem Krümmungsradius von weniger als 5 mm, insbesondere weniger als 3 mm, insbesondere weniger als 2 mm aufweist. Wird ein flächiges Substrat über eine derartige Kante gezogen, so stellt sich dann, wenn das flächige Substrat stets Kontakt zum Umlenkelement hat, ein entsprechend kleiner Krümmungsradius auf der dem Film zugewandten Seite im Umlenkbereich ein, dessen Vorteile oben beschrieben sind.

Vorzugsweise ist die weitere, mit der Führungsfläche eine Kante einschließende Fläche, ebenfalls eine zum Führen des Flächensubstrats ausgebildete Führungsfläche.

Es ist bevorzugt, dass der von den Führungsflächen in der Umgebung der Kante gebildete eingeschlossene Winkel kleiner ist als 120° insbesondere zwischen 45° und 90°, insbesondere zwischen 55° und 75° beträgt. Wenn eine oder beide Führungsflächen gekrümmt ausgeführt sind, so wird der in der Umgebung der Kante gebildete Winkel dadurch bestimmt, dass eine Ausgleichsgerade von der Länge des Durchmessers des Umlenkbereichs in die Führungsflächen eingeschrieben und der Winkel zwischen beiden Ausgleichsgeraden bestimmt wird.

Der von den Führungsflächen in der Umgebung der Kante gebildete eingeschlossene Winkel stellt einen Kompromiss zwischen einem möglichst wenig unter 180° liegenden eingeschlossenen Winkel zum Vermeiden von Belastungen für das flächige Substrat und einem möglichst wenig oberhalb von 0° liegenden eingeschlossenen Winkel zum Verringern von Lufteinschlüssen dar. Versuche habe gezeigt, dass Winkel innerhalb der vorstehend angegebenen Winkelintervalle zu einer Verringerung der Neigung zur Lufteinschlussbildung führen.

Vorzugsweise weist zumindest eine Führungsfläche eine Balligkeit auf, insbesondere eine Balligkeit, deren Krümmungsradius zwischen 300mm und 2000mm liegt. Eine ballige Fläche kann in erster Näherung durch einen Paraboloiden beschrieben werden. Ein derartiger Paraboloid weist zwei Hauptachsen und entsprechend zwei Krümmungsradien auf. Werden diese beiden Krümmradien zwischen 300- 2000mm gewählt, so schmiegt sich das Substrat an das Umlenkelement an. Dadurch wird eine gleichmäßige Zuführung des Substrats erreicht ohne dass es zu Falten im Substrats kommt.

In einer bevorzugten Ausführungsform wird die Kante des Umlenkelements von einem Stab mit einem möglichst geringen Durchmesser von vorzugsweise unter 8 mm, insbesondere im Bereich von etwa 3-6mm gebildet. Dabei kann insbesondere ein drehbar gelagerter Stab eingesetzt werden, der vorzugsweise zumindest auch durch das Luftkissen gelagert ist. Einer beliebigen Durchmesserverringerung des Stabes steht die erforderliche mechanische Belastbarkeit des Stabes begrenzend entgegen. Bei allen Stabdurchmessern, insbesondere bei kleinen Stabdurchmessern kann die Lagerung des Stabes vorteilhaft mittels eines Luftkissens erreicht werden. Dieses Luftkissen wird beispielsweise innerhalb eines den Stab teilweise umschließenden Hohlraums, der den Stab gegen Herausfallen gesichert aufnimmt, mittels eines im Umlenkelement ausgebildeten Luftkanals erzeugt, der sich bis in den Hohlraum erstreckt.

Ist der Stab drehbar gelagert, so kommt es beim Umlenken des Substrats zu nahezu keiner Gleitreibung im Bereich der Kante, was die thermische Belastung des flächigen Substrats vermindert. Durch die Luftkissenlagerung wird die Reibung zusätzlich vermindert.

Bevorzugt sind die Führungsflächen als Luftkissenflächen ausgebildet. Unter einer Luftkissenfläche wird eine Fläche verstanden, die so an eine Druckluftzuführung anschließbar ist, dass sich dann, wenn ein Substrat auf der Luftkissenfläche liegt, zwischen beiden ein Luftkissen ausbildet. Hierdurch vermindert sich, wie oben bereits ausgeführt, die Reibung zwischen flächigem Substrat und Umlenkelement, so dass die thermische Belastung des Flächensubstrats verringert wird. Durch Verwendung gekühlter Luft für die Ausbildung des Luftkissens kann zudem das flächige Substrat gekühlt werden, was dessen thermische Belastung, vermindert.

Bevorzugt ist, dass die Kante von einer für Druckluft durchlässigen Oberfläche, insbesondere einem Sieb oder Gewebeelement gebildet ist. Hierdurch wird eine definierte Kante des Umlenkelements erzielt und die Ausbildung eines stabilen Luftkissens erreicht.

In einer bevorzugten Ausführungsform sind im Inneren des Umlenkelements verlaufende Kanäle zur Aufnahme von Kühlmedien vorgesehen. Als Kühlmedien kommen beispielsweise Wasser, Öl, Luft und in Kühlanlagen verwendete Arbeitsgase in Betracht. Besonders bei einem heißen Klebstofffilm und/oder niedrigen Geschwindigkeiten des Substrats kann es zu thermischen Belastungen des flächigen Substrats kommen, da der heiße Klebstoff über eine lange Zeitspanne mit dem Substrat in Kontakt ist, bevor das Substrat die gekühlte Leitwalze erreicht. Durch das in den Kanälen vorhandene Kühlmedium wird zunächst das Umlenkelement und dadurch das flächige Substrat gekühlt. Befindet sich ein Luftkissen zwischen dem flächigen Substrat und dem Umlenkelement, so kühlt das Kühlmedium zudem zunächst die Luft, die das Luftkissen bildet und so mittelbar das flächige Substrat.

In einer bevorzugten Ausführungsform weist das Umlenkelement eine fischgratförmige Oberflächenriffelung auf der Führungsfläche auf, insbesondere auf den Führungsfläche. Die Oberflächenriffelung ist dabei so angeordnet, dass das flächige Substrat bei der Bewegung entlang der Führungsfläche über die Oberflächenriffelung senkrecht zur Bewegungsrichtung auswärts gestreckt wird. Auf diese Art und Weise wird die Neigung des Substrats zur Faltenbildung vermindert

In einer bevorzugten Ausführungsform ist ein feinmaschiges Gewebe auf der Führungsfläche, insbesondere den Führungsflächen vorgesehen. Das feinmaschige Gewebe dient dazu, ausströmende Druckluft so zu verteilen, dass sich ein homogenes Luftkissen ausbildet. In einem homogenen Luftkissen sind die Luftdruck-, Luftströmungs- und Lufttemperaturunterschiede innerhalb des Luftkissens so gering ausgeprägt, dass sie das Substrat nicht beeinträchtigen. Als feinmaschig wird ein Gewebe betrachtet, dass mehr als 10 Fäden/cm aufweist.

In einer besonders bevorzugten Ausführungsform einer Vorrichtung zum Auftragen eines Films ist die Auftragsvorrichtung so angeordnet, dass der Punkt des Substratlaufpfads, an dem dieser einen minimalen Abstand von der Abgabeöffnung hat, zwischen 0 und 20 mm, insbesondere zwischen 1 und 10 mm vor der Kante des Umlenkelements liegt. Versuche haben gezeigt, dass hierdurch die Bildung von Lufteinschlüssen besonders effektiv verringert werden kann.

Bei einer besonders bevorzugten Ausführungsform ist in der Umgebung des Umlenkbereichs eine Gegenelektrode so angeordnet, dass der Substratbahnpfad zwischen Umlenkelement und Gegenelektrode verläuft, und die Gegenelektrode gegen andere, insbesondere alle anderen Elemente der Vorrichtung elektrisch isoliert ist und mittels einer Spannungsquelle auf ein elektrisches Potential von betragsmäßig zumindest 1 kV gegenüber den übrigen Elementen der Vorrichtung aufladbar ist. Durch diese Maßnahme wird erreicht, dass das Umlenkelement nur gegen die Gegenelektrode auf einem elektrischen Potenzial liegt und alle anderen Bauteile potentialfrei bleiben. Zudem kann die Lage der Gegenelektrode so gewählt werden, dass der Abstand zwischen Umlenkelement und dieser Gegenelektrode klein wird, so dass das elektrische Feld besonders stark gewählt werden kann.

Alternativ oder ergänzend zum Vorgenannten kann vorgesehen werden, dass das Umlenkelement gegen andere, insbesondere alle anderen Elemente der Vorrichtung elektrisch isoliert ist und mittels einer Spannungsquelle auf ein elektrisches Potenzial von zumindest 1 kV gegenüber den übrigen Elementen der Vorrichtung aufladbar ist. Hierdurch wird ein elektrisches Feld zwischen dem Umlenkelement und den anderen Elementen der Maschine aufgebaut. Wird dieses elektrische Potenzial zusätzlich und mit entgegengesetztem Vorzeichen zu einem Potenzial einer Gegenelektrode aufgebracht, so lässt sich das elektrische Feld verstärken. An der Kante des Umlenkelements konzentrieren sich die Feldlinien des elektrischen Feldes und bilden dort ein besonders starkes, inhomogenes elektrisches Feld. Das elektrische Feld hat den Effekt, die Neigung zur Bildung von Lufteinschlüssen weiter zu reduzieren.

Im Folgenden werden zwei Ausführungsbeispiele der Erfindung anhand der Zeichnungen näher erläutert. Dabei zeigen:
- Figur 1: eine schematische Darstellung einer Vorrichtung und eines Verfahrens zum Auftragen eines Klebstofffilms,
- Figur 2: eine alternative Ausführungsform einer derartigen Vorrichtung bzw. eines derartigen Verfahrens,
- Figur 3a: den mit A gekennzeichneten Ausschnitt aus Fig. 2,
- Figur 3b: den unter Ausschnitt A liegende Abschnitt des Umlenkelements nach Fig. 2,
- Figur 4: eine alternative Gestaltung der Kante eines Umlenkelements nach Figur 3a und
- Figur 5a, b: schematische Darstellungen zweier Oberflächenstrukturen des Umlenkelements aus Figur 2.

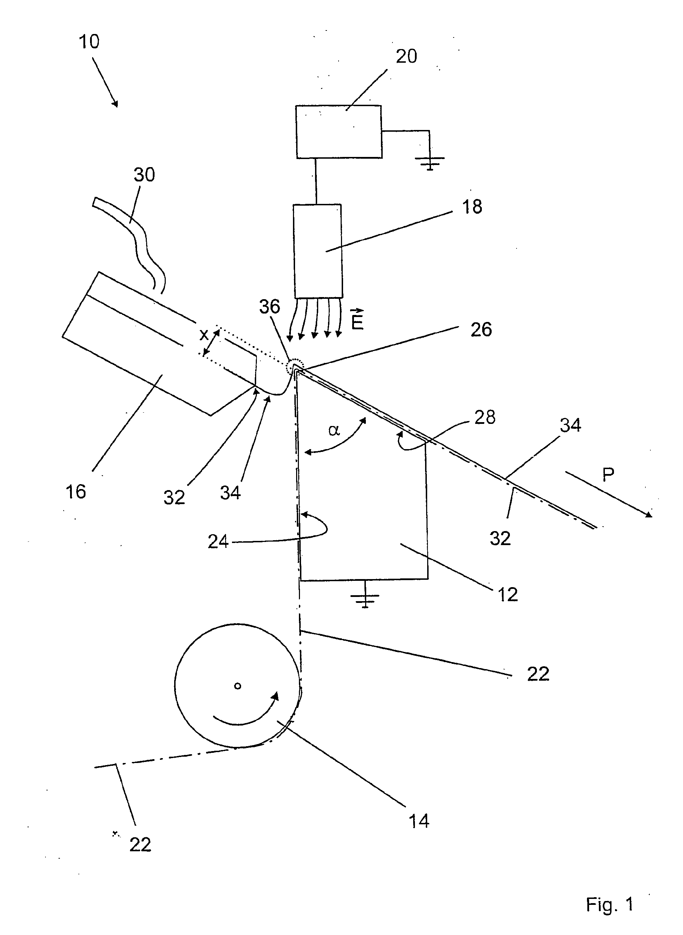

Figur 1 zeigt eine Aufbring- oder eine Auftragsvorrichtung 10, die ein im Wesentlichen keilförmiges Umlenkelement 12, eine gekühlte Umlenkwalze 14, einen Auftragskopf 16, eine Gegenelektrode 18 und ein Netzteil 20 umfasst.

Von der Umlenkwalze 14 wird eine aus Polypropylen (PP), Polyethylen (PE) oder Polyethylentherephthalat (PET) bestehende, 20-100µm dicke Substratbahn 22 mit einer Geschwindigkeit von bis zu 600 m/min in Richtung auf den Auftragskopf 16 zu umgelenkt. Die Substratbahn 22 verläuft entlang einer Zuführ-Führungsfläche 24 des Umlenkelements 12, wird an einer Kante 26 des Umlenkelements 12 scharf umgelenkt und läuft dann entlang einer Abführ-Führungsfläche 28 in Richtung des Pfeils P ab.

Die Umlenkwalze 14 ist dabei als-Kühlwalze ausgebildet, wobei die Anschlüsse für das Kühlmedium nicht eingezeichnet sind. Durch die Kühlung wird die Substratbahn 22 gfs. bis auf Taupunkt gekühlt. Anschließend wird sie entlang der Zuführ- Führungsfläche 24 geführt und gelangt in die Umgebung des Auftragskopfs 16.

Der Auftragskopf 16 wird über eine Klebstoffzuleitung 30 mit flüssigem Heißklebstoff versorgt, der eine Temperatur von 150°C hat. Diese Temperatur ist in Abhängigkeit der Materialeigenschaften des Substrats und des Heißklebsztoffs einzustellen. Der Heißklebstoff verlässt den Auftragskopf 16 durch eine Austrittsöffnung 32 in Form eines dünnen, transparenten Klebstofffilms 34. Der Auftragskopf und seine Austrittsöffnung sind so zu dem Umlenkelement angeordnet, daß der Klebstofffilm 34 etwa parallel zur Abführrichtung des Substrats und um einen mit x gekennzeichneten Versatz von der Kante 26 des Umlenkelements 12 in Zuführrichtung beabstandet austritt. Der Klebstofffilm 34 kommt vorzugsweise an einem Ort in unmittelbare Nähe mit der Substratbahn 22, der sich in Laufrichtung der Substratbahn vor dieser Kante befindet. An diesem Ort wird zunächst eine Annäherung auf einen sehr geringen Abstand zwischen Substratbahn 22 und Klebstofffilm 34 erreicht, jedoch noch kein unmittelbarer Kontakt.

Nachdem der Klebstofffilm 34 und die Substratbahn 22 miteinander in unmittelbare Nähe gekommen sind, werden beide dadurch scharf umgelenkt, dass sie gemeinsam über die Kante 26 gezogen werden. Dazu wird von einer hier nicht eingezeichneten Vorrichtung eine Zugkraft auf die Substratbahn 22 ausgeübt, die in Richtung des Pfeils P wirkt. Der Winkel a zwischen den Zuführ-Führungsfläche 24 und der Abführ- Führungsfläche 28 beträgt 60°. Der Krümmungsradius der Substratbahn 22 beträgt in dem Moment, in dem sie über die Kante 26 gezogen wird, 2mm. Entsprechend beträgt der Krümmungsradius des Substratbahnlaufpfads an der Kante 26 ebenfalls 2mm. Durch das scharfe Umlenken gelangen die Substratbahn 22 und der Klebstofffilm 34 in unmittelbaren Kontakt und haften lufteinschlussfrei aneinander.

Das Umlenkelement 12 ist geerdet. In Verlängerung der Zuführ Führungsfläche 24 und seitlich auf die Abführ-Führungsfläche 28 hin verschoben befindet sich gegenüber der AbführFührungsfläche 28 die Gegenelektrode 18. Diese wird durch einen Generator 20 gegenüber dem elektrischen Nullniveau auf eine konstante Hochspannung von 10-30 kV aufgeladen. Dadurch bildet sich zwischen dem Umlenkelement 12 und der Gegenelektrode 18 ein elektrisches Feld E aus, das insbesondere an der Kante 26 aufgrund deren Krümmung besonders groß ist, da sich hier die elektrischen Feldlinien konzentrieren.

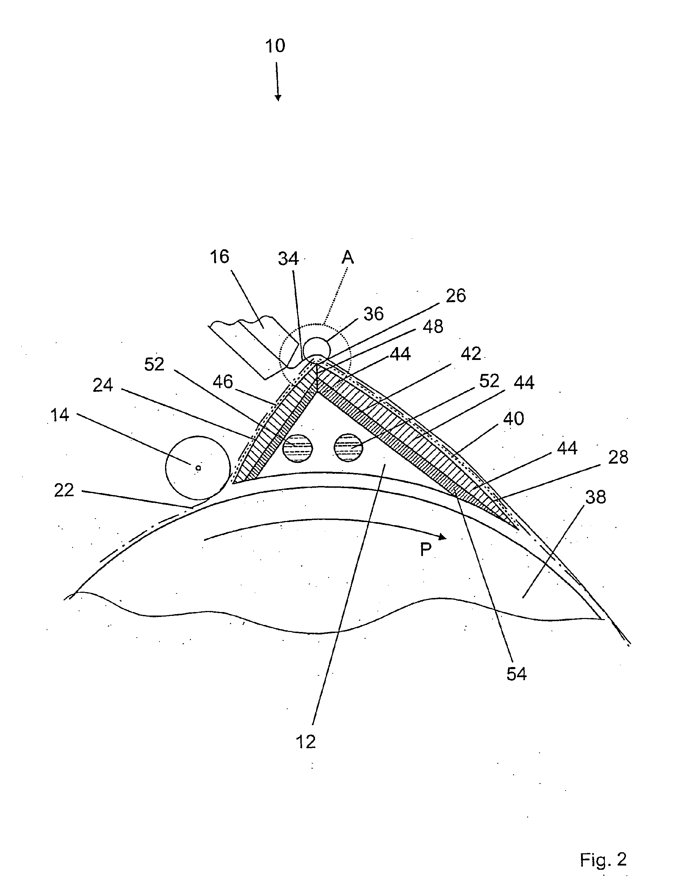

Figur 2 zeigt eine alternative Ausführungsform der Aufbringvorrichtung 10. Die Substratbahn 22 läuft dabei zunächst auf einer gfs. bis zum Taupunkt gekühlten Leitwalze 38, die sich in Richtung des Pfeils P dreht. Von der Leitwalze 38 wird die Substratbahn 22 durch die Umlenkwalze 14 umgelenkt und verläuft entlang der Zuführ-Führungsfläche 24 des Umlenkelements 12, um die Kante 26 herum und entlang der AbführFührungsfläche 28, von wo aus sie wiederum auf die Leitwalze 38 gelangt.

Das Umlenkelement 12 hat im Wesentlichen einen dreiecksförmigen Querschnitt, wobei jedoch die längste Seite, die der Leitwalze 38 zugewandt ist, konkav ausgebildet ist und einen Krümmungsradius aufweist, der dem Radius der Leitwalze 38 entspricht.

Die beiden anderen Seitenflächen des Umlenkelements 12 sind leicht ballig ausgeführt. Dabei verläuft eine Hauptachse des jeweiligen Schmiegeparaboloids parallel zur Drehachse der Leitwalze 38, die andere Hauptachse verläuft senkrecht dazu und entlang des Laufpfades 22. In beiden Hauptrichtungen ist der Krümmungsradius größer als jener der Leitwalze 38 und beträgt beispielsweise 1000mm bezüglich der Hauptachse, die parallel zur Drehachse der Leitwalze 38 verläuft und ebenfalls 1000mm bezüglich der anderen Hauptachse.

Zwischen der Substratbahn 22 und dem Umlenkelement 12 befindet sich ein Luftkissen 40. Zum Aufbau dieses Luftkissens 40 ist im Inneren des Umlenkelements 12 ein Hohlraum 42 vorgesehen. Dieser steht über einen hier nicht eingezeichneten Anschluss in Verbindung mit einer ebenfalls nicht eingezeichneten Druckluftquelle, so dass der Hohlraum 42 mit Druckluft gefüllt ist. Durch eine Vielzahl von Bohrungen 44 gelangt die Druckluft aus dem Hohlraum 42 an die Oberfläche des Umlenkelements 12. Dort tritt sie durch ein feinmaschiges Gewebe 46, das einen Teil des Umlenkelements 12 darstellt, nach außen und bildet zwischen der Substratbahn 22 und dem Umlenkelement 12 das Luftkissen 40.

Von der Kante 26 verläuft ein Schlitz 48 bis in den Hohlraum 42. Durch den Schlitz 38 tritt im Bereich der Kante 26 ebenfalls Druckluft aus und bildet ein Luftkissen um die Kante 26 aus.

Im Bereich der Kante 26 wird die Substratbahn 22 im Umlenkbereich scharf umgelenkt. Der Umlenkbereich 36 ist dabei der Bereich des Substratbahnlaufpfads, an dem sich die Krümmung stark ändert: Im Bereich der Zuführ-Führungsfläche 24 entspricht der Krümmungsradius der Substratbahn 22 im Wesentlichen der Krümmung der Zuführ-Führungsfläche 24, entsprechend ist der Krümmungsradius des Substratbahnlaufpfads im Bereich der AbführFührungsfläche 28 im Wesentlichen gleich deren Krümmungsradius. Zwischen beiden Bereichen liegt der Umlenkbereich 36, in dem der Krümmungsradius statt 1000mm nunmehr lediglich 1-6mm beträgt.

Von dem Auftragskopf 16 wird flüssiger Heißklebstoff in Form eines Klebstofffilms 34 auf die Substratbahn 22 abgegeben. Der Klebstofffilm 34 kommt dabei in unmittelbare Nähe mit der Substratbahn 22, nicht jedoch in unmittelbaren Kontakt. Im Bereich zwischen Klebstofffilm 34 und Substratbahn 22 befindet sich Luft. Werden Klebstofffilm 34 und Substratbahn 22 im Umlenkbereich 36 scharf umgelenkt, so wird der Klebstofffilm in unmittelbaren Kontakt mit der Substratbahn gebracht und dabei diese Luft entgegen der Bewegungsrichtung der Substratbahn aus diesem Bereich herausgedrückt. Dadurch haftet der Klebstofffilm 34 danach ohne Lufteinschlüsse auf der Substratbahn 22 an.

Aufgrund des Wärmeeintrags durch den Heißklebstoff, der den Klebstofffilm 34 bildet, kommt es zunächst zu einer Erwärmung der Substratbahn 22 im Umlenkbereich. Um einer möglichen thermischen Schädigung vorzubeugen, wird die im Hohlraum 42 befindliche Druckluft und das Umlenkelement gekühlt. Dazu sind ein oder mehrere Kühlmittelkanäle 52 im Umlenkelement 12 vorgesehen. Die Kühlmittelkanäle 52 verlaufen dabei parallel zu den Drehachsen von Leitwalze 38 und Umlenkwalze 14. Um die Wärmeübertragung von Druckluft auf das Kühlmedium zu verbessern ist das Umlenkelement aus gut leitendem Material gefertigt.

Bei einer alternativen Ausführungsform ist das Umlenkelement oder Oberflächenäbschnitte des Umlenkelements aus einem Sintermetall hergestellt. Sintermetalle eignen sich einerseits dazu, um gleitfähige Oberflächen auszubilden. Andererseits kann bei Sintermetallen eine offene Porosität eingestellt werden, die bei der erfindungsgemäßen Anwendung vorteilhaft zur Ausbildung des Luftpolsters verwendet werden kann. So ist es möglich, die Gleitbahnen des Umlenkelements zumindest teilweise aus einem offen porösen Sintermetall herzustellen und dieses Sintermetall mit einem Druckluftanschluss zu verbinden, so dass aus den Poren des Sintermetalls unter Druck stehende Luft austritt und zwischen Substrat und der Oberfläche des Sintermetalls das Luftpolster ausgebildet wird.

Die Zugspannung, unter der die Substratbahn 22 auf ihrem Weg entlang des Umlenkelements 12 steht, wird über den Abstand des Umlenkelements 12 vom Mittelpunkt der Leitwalze 38 geregelt, der die Führungsgröße darstellt. Als Regelgröße wird beispielsweise der Abstand des Substrats 22 von der Kante 26 oder die Häufigkeit von Lufteinschlüssen verwendet.

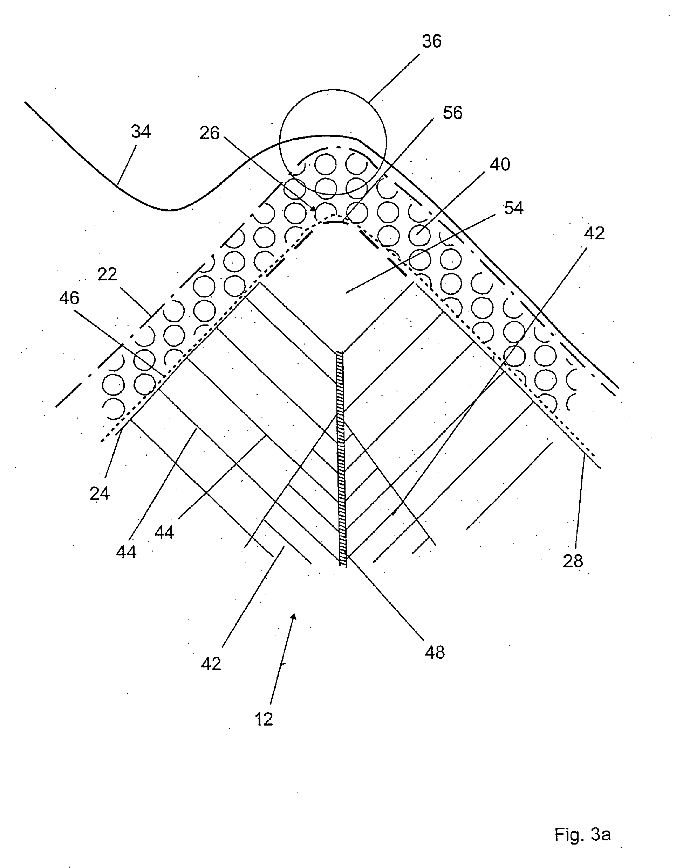

Figur 3a zeigt eine alternative Ausführungsform eines Umlenkelements 12. Der vom Hohlraum 42 zur Kante 26 verlaufende Schlitz 48 endet in einem Hohlraum 54, der von einem sehr feinmaschigen Sieb 56 zur Kante 26 hin begrenzt wird. Das Gewebe 46 erstreckt sich von der Zuführ-Führungsfläche 24 über das Sieb 56 hinweg entlang der AbführFührungsfläche 28. Je nachdem, wie weit sich das Sieb 56 über die Kante 26 erstreckt, kann das Luftkissen 40 im Bereich der Kante in seiner Stärke variiert werden. Alternativ zum Sieb ist auch ein Lochblech o. ä. einsetzbar.

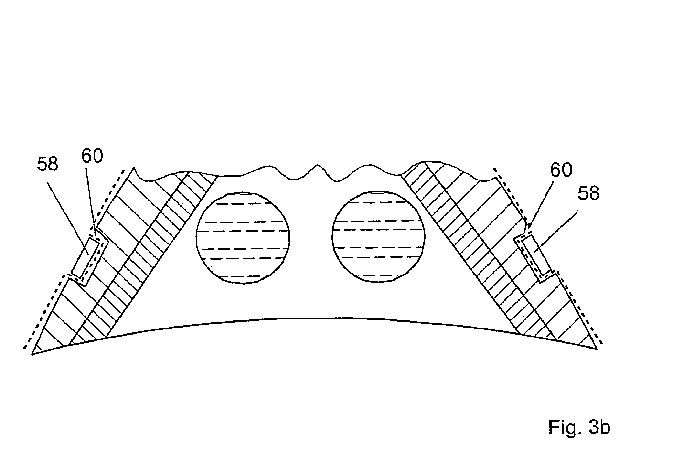

Figur 3b zeigt die Befestigung des Gewebes 46 mittels Klemmsteinen 58, die das Gewebe in einer Ausnehmung 60 festklemmen und dadurch verhindern, dass es von der aus dem Inneren des Umlenkelements ausströmenden Druckluft abgehoben wird. Die Klemmsteine 58 sind mit in dieser Ansicht nicht sichtbaren Senkkopfschrauben befestigt.

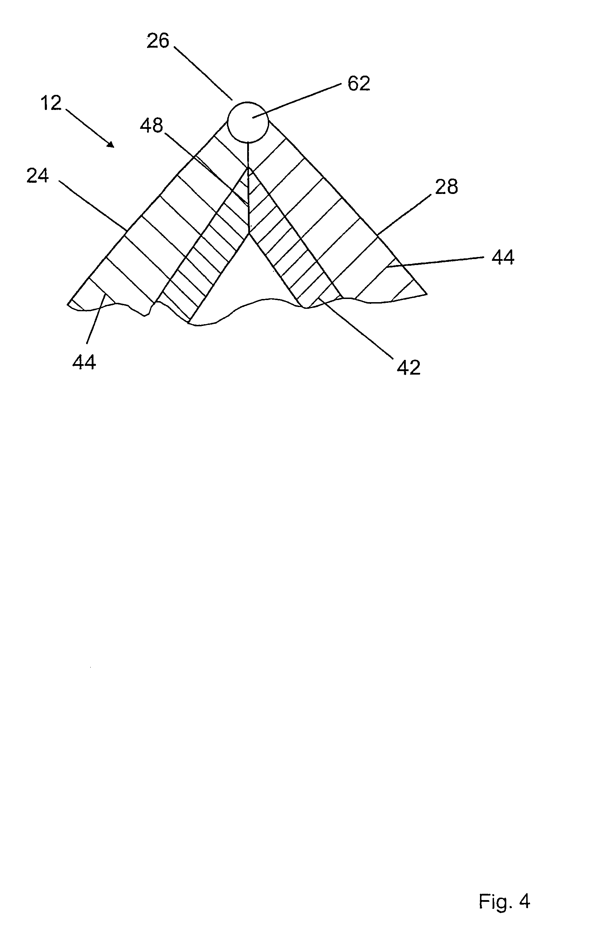

Fig. 4 zeigt eine alternative Ausführungsform der Kante 26 des Umlenkelements 12. Zwischen der Zuführ-Führungsfläche 24 und der Abführ-Führungsfläche 28 ist ein Stab 62 vorgesehen, der durch hier nicht eingezeichnete Kugellager drehbar gelagert ist. Der Stab 62 weist einen Durchmesser von 2mm auf und ist so positioniert, dass annähernd dessen halber Umfang über die Verlängerungen von Zuführ-Führungsfläche 24 und Abführ-Führungsfläche 28 hinausragt.

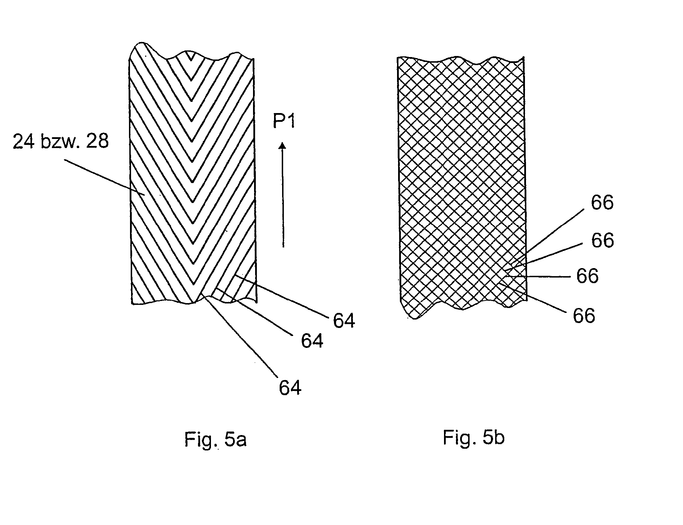

Fig. 5a zeigt schematisch eine Ausführungsform der Oberflächenbeschaffenheit der Zuführ-Führungsfläche 24 und/oder der Abführ-Führungsfläche 28. Auf der Führungsfläche sind linear verlaufende Riffel 64 ausgebildet, also Erhebungen, die sich über die Grundfläche der Zuführ-Führungsfläche erheben. Diese Riffel 64 sind zur Reibungsminderung mit einem Chromüberzug versehen und sind fischgratförmig bzw. V-förmig so angeordnet, so dass je zwei Riffel in einem Punkt zusammenlaufen. Alle derartigen Punkte liegen auf einer Geraden, die parallel zu den Seiten der Führungsfläche verläuft.

Die hier nicht eingezeichnete Substratbahn bewegt sich in Richtung des Pfeils P. Durch die Anordnung der Riffeln 64 wird die Substratbahn beim Gleiten auf der Führungsfläche auseinander gezogen, so dass eine Neigung der Substratbahn zur Faltenbildung in vermindert wird.

Fig. 5b zeigt schematisch eine Draufsicht auf die Zuführ-Führungsfläche 24, die mit dem Gewebe 46 bespannt ist. Das Gewebe 46 weist eine Leinwandbindung und eine Fadendichte von 10 Fäden/cm auf. Unterhalb des Gewebes 46 und somit in der Draufsicht nicht sichtbar enden die Stichbohrungen 44, aus denen Druckluft austritt. Durch das Gewebe 46 wird die Druckluft so verteilt, dass sich ein homogenes Luftkissen ausbildet.

## Patentansprüche

1. Verfahren zum Auftragen eines Films (34) auf ein flächiges, insbesondere luftundurchlässiges Substrat (22) mit folgenden Schritten:
- Zuführen des flächigen Substrats (22) in einer Zuführrichtung zu einem Auftragskopf (16),
- Auftragen eines von dem Auftragskopf (16) abgegebenen Films (34) auf das flächige Substrat (22),
**gekennzeichnet durch**
- scharfes Umlenken des flächigen Substrats zusammen mit dem Film (34), der in einem Umlenkbereich (36) mit dem Substrat in einer von der Zuführrichtung unterschiedlichen Abführrichtung in Kontakt steht, derart, dass der Krümmungsradius des flächigen Substrats (22) auf der dem Film (34) zugewandten Seite im Umlenkbereich (36) kleiner als 8 mm ist,
- Bilden eines Luftkissens (40) im Umlenkbereich (36) zwischen der Kante (26) und dem flächigen Substrat (22), so dass das flächige Substrat (22) nicht in direkten Kontakt mit der Kante (26) kommt.

2. Verfahren nach Anspruch 1,
**dadurch gekennzeichnet, dass** der Krümmungsradius kleiner als 6 mm, insbesondere kleiner als 4 mm ist, insbesondere kleiner als 2 mm ist.

3. Verfahren nach einem der vorherigen Ansprüche,
**dadurch gekennzeichnet, dass** das scharfe Umlenken des flächigen Substrats (22) durch Ziehen des Substrats über einen drehbar gelagerten Stab mit Radius, der dem Krümmungsradius entspricht, erfolgt.

4. Verfahren nach einem der vorherigen Ansprüche,
**dadurch gekennzeichnet, dass** das scharfe Umlenken des flächigen Substrats (22) durch Bewegen des flächigen Substrats (22) über eine Kante (26) in dem Umlenkbereich (36) bewirkt wird, so dass das Substrat (22) und der Film (24) in unmittelbarem Kontakt gebracht werden und aneinander haften

5. Verfahren nach Anspruch 4,
**dadurch gekennzeichnet, dass** durch das scharfe Umlenken des Substrates (22) Lufteinschlüsse zwischen Substrat (22) und Film (24) verringert werden.

6. Verfahren nach einem der vorherigen Ansprüche,
**dadurch gekennzeichnet, dass** der Film (34) an einen Ort in unmittelbare Nähe in Bezug auf das flächige Substrat (22) gebracht wird, der einen Abstand von 0 - 20 mm, insbesondere 1 - 10 mm vom Umlenkbereich (36) hat.

7. Verfahren nach einem der vorherigen Ansprüche,
**dadurch gekennzeichnet, dass** das flächige Substrat derart umgelenkt wird, dass der zwischen der Zuführrichtung und der Abführrichtung in der Umgebung des Umlenkbereichs (36) eingeschlossene Winkel 40° - 110°, insbesondere 50° - 80°, insbesondere 55° - 65° beträgt.

8. Verfahren nach einem der vorherigen Ansprüche,
**dadurch gekennzeichnet, dass** das flächige Substrat (22) zunächst auf einer vorzugsweise gekühlten Leitwalze (38) geführt wird, anschließend von der Leitwalze (38) entlang einer Umlenkwalze (14) mit einem im Vergleich zur Leitwalze (38) kleineren Durchmesser von der Leitwalze weg (38) auf den Auftragskopf(16) zu und nach dem Umlenken auf die Leitwalze (38) zurückgeführt wird.

9. Verfahren nach einem der vorherigen Ansprüche,
**dadurch gekennzeichnet, dass** das flächige Substrat (22) im Umlenkbereich (36) einem elektrostatischen Feld ausgesetzt wird, welches an mindestens einer Stelle im Umlenkbereich (36) eine Feldstärke von mehr als 5 kV/m aufweist.

10. Verfahren nach einem der vorherigen Ansprüche,
**dadurch gekennzeichnet, dass** das flächige Substrat (22) im Zuführbereich und/oder Umlenkbereich gekühlt wird.

11. Umlenkelement zum Umlenken eines Filmes und eines Substrats, insbesondere eines luftundurchlässigen flächigen Substrats (22),
**gekennzeichnet durch** eine erste, zum Führen eines flächigen Substrats ausgebildete Führungsfläche (24) und eine zweite Führungsfläche (28), welche zusammen eine Kante (26) für die scharfe Umlenkung des Filmes (34) und flächigen Substrats bilden, wobei die Kante (26) einen Krümmungsradius von weniger als 8 mm aufweist, und
mindestens einen Druckluftkanal (28), der sich **durch** das Umlenkelement (12) zur Kante (26) erstreckt und mindestens eine mit dem Druckluftkanal (28) verbundene Austrittsöffnung im Bereich der Kante (26), so dass vom Austritt ausströmende Druckluft ein um die Kante (26) verlaufendes Luftkissen (40) bildet.

12. Umlenkelement nach Anspruch 11,
wobei die zwei Führungsflächen (24, 28) so winklig zueinander angeordnet sind, dass das Substrat und der Film während seiner Bewegung entlang der Kante (26) scharf umgelenkt wird und **dadurch** das Substrat (22) und der Film (34) in unmittelbaren Kontakt kommen und aneinander haften ohne Lufteinschlüsse.

13. Umlenkelement nach Anspruch 11 oder 12,
**dadurch gekennzeichnet, dass** die Kante (26) einen Krümmungsradius von weniger als 6 mm, insbesondere weniger als 4 mm, insbesondere weniger als 2 mm aufweist.

14. Umlenkelement nach einem der Ansprüche 11 bis 13,
**dadurch gekennzeichnet, dass** der von den Führungsflächen (24, 28) in der Umgebung der Kante (26) gebildete eingeschlossene Winkel kleiner ist als 120°, insbesondere 45° bis 90°, insbesondere 55° bis 75° beträgt.

15. Umlenkelement nach einem der Ansprüche 11 bis 14,
**dadurch gekennzeichnet, dass** mindestens eine Führungsfläche (24, 28) eine Balligkeit aufweist, insbesondere derart, dass die Balligkeit einen Krümmungsradius zwischen 300 mm und 2000 mm aufweist.

16. Umlenkelement nach einem der Ansprüche 11 bis 15,
**dadurch gekennzeichnet, dass** die Kante (26) von einem Stab (62) mit einem Durchmesser von weniger als 8 mm gebildet wird, wobei der Stab insbesondere drehbar gelagert und vorzugsweise zumindest auch durch das Luftkissen (40) gelagert ist.

17. Umlenkelement nach einem der Ansprüche 1 bis 16,
**dadurch gekennzeichnet, dass** die Führungsflächen (24, 28) als Luftkissenflächen ausgebildet sind.

18. Umlenkelement nach einem der Ansprüche 11 bis 17,
**dadurch gekennzeichnet, dass** die Kante (26) von einer für Druckluft durchlässige Oberfläche, insbesondere einem Sieb (56) oder Gewebeelement gebildet wird.

19. Umlenkelement nach einem der Ansprüche 11 bis 18,
**gekennzeichnet durch** im Inneren verlaufende Kanäle (52) zur Aufnahme von Kühlmedium.

20. Umlenkelement nach einem der Ansprüche 11 bis 19,
**gekennzeichnet durch** eine fischgrätenförmige Oberflächenriffelung (64) der Führungsflächen (24, 28).

21. Umlenkelement nach einem der Ansprüche 11 bis 20,
**gekennzeichnet durch** ein feinmaschiges Gewebe (46) auf den Führungsflächen (24, 28).

22. Vorrichtung zum Auftragen eines Films auf ein flächiges, insbesondere luftundurchlässiges Substrat (22), mit
einem Umlenkwalzen (12, 14) aufweisenden Zuführelement (38) zum Zuführen des flächigen Substrats (22) und
einem Auftragskopf (16) zum Auftragen eines Films (34),
**gekennzeichnet durch** ein Umlenkelement (12) nach einem der Ansprüche 11 bis 20.

23. Vorrichtung nach Anspruch 22,
**dadurch gekennzeichnet, dass** der Auftragskopf (16) einen minimalen Abstand von der Abgabeöffnung (32) von 0 bis 20 mm, insbesondere 1 bis 8 mm hat und vor der Kante (26) des Umlenkelements (12) liegt.

24. Vorrichtung nach einem der Ansprüche 22 oder 23,
**dadurch gekennzeichnet, dass** das Umlenkelement (12) gegen andere, insbesondere gegen alle anderen Elemente der Vorrichtung elektrisch isoliert ist und mittels einer Spannungsquelle (20) auf ein elektrisches Potential von betragsmäßig mindestens 1 kV, bevorzugt mindestens 5 kV gegenüber den anderen Elementen der Vorrichtung aufladbar ist.

25. Vorrichtung nach einem der Ansprüche 22 bis 24,
**dadurch gekennzeichnet, dass** in der Umgebung des Umlenkbereichs (36) eine Gegenelektrode (18) so angeordnet ist, dass der Substratbahnpfad zwischen dem Umlenkelement (12) und der Gegenelektrode (18) verläuft und gegen andere und insbesondere gegen alle anderen Elemente der Vorrichtung elektrisch isoliert ist und mittels einer Spannungsquelle (20) auf ein elektrisches Potential von betragsmäßig mindestens 1 kV, bevorzugt mindestens 5 kV gegenüber den anderen Elementen der Vorrichtung aufladbar ist.

## Claims

1. A method of applying a film (34) to a planar, in particular air-impermeable substrate (22), comprising the following steps:
- feeding the planar substrate (22) in a feed direction towards an application head (16).
- applying a film (34) delivered by the application head (16) on to the planar substrate (22), **characterized by**
- sharply deflecting the planar substrate together with the film (34) which is in contact therewith in a deflection region (36) into a discharge direction which is different from the feed direction, in such a way that the radius of curvature of the planar substrate on the side towards the film (34) in the deflection region (36) is less than 8 mm
- forming an air cushion (40) in the deflection region (36) between the edge (26) and the planer substrate (22), so that the planar substrate (22) does not come into direct contact with the edge (26).

2. A method according to claim 1 **characterised in that** the radius of curvature is less than 6 mm, in particular less than 4 mm, in particular less than 2 mm.

3. A method according to one of the preceding claims **characterised in that** sharply deflecting the planar substrate (22) is effected by pulling the substrate over a rotatably mounted cylindrical bar of a radius corresponding to the radius of curvature.

4. A method according to one of the preceding claims **characterised in that** sharply deflecting the planar substrate (22) is implemented by moving the planar substrate (22) and the film (24) over an edge (26) in the deflection region (36)
so that the substrate (22) and the film (24) come into direct contact and adhere to each other.

5. A method according to claim 1 **characterised in that** sharply deflecting the planar substrate (22) prevents air inclusions between the substrate (22) and the film (26).

6. A method according to one of the preceding claims **characterised in that** the film (34) is brought into immediate proximity with respect to the planar substrate (22) at a location which is at a spacing of 0 - 20 mm, in particular 1 - 10 mm from the deflection region (36).

7. A method according to one of the preceding claims **characterised in that** the planar substrate (22) is so deflected that the angle included between the feed direction and the discharge direction in the region surrounding the deflection region (36) is 40° - 110°, in particular 50° - 80°, in particular 55° - 65°.

8. A method according to one of the preceding claims **characterised in that** the planar substrate (22) is firstly guided on a preferably cooled guide roller (38), it is then guided from the guide roller (38) along a deflection roller (14) of a smaller diameter in comparison with the guide roller (38) away from the guide roller (38) to the application head (16) and after deflection is guided back on to the guide roller (38).

9. A method according to one of the preceding claims **characterised in that** the planar substrate (22) is subjected in the deflection region (36) to an electrostatic field which is of a field strength of more than 5 kV/m at at least one location in the deflection region (36).

10. A method according to one of the preceding claims **characterised in that** the planar substrate (22) is cooled in the feed region and/or in the deflection region (36).

11. A deflection element for deflecting a film and a substrate and in particular air-impermeable planar substrate (22):
**characterized by** a first guide surface (24) adapted to guide a planar substrate and a second guide surface (28) which together form an edge (26) for the sharp deflection of the film and the planar substrate, wherein the edge (26) has a radius of curvature of less than 8 mm, and
at least one compressed air passage (48) extending through the deflection element (12) to the edge (26) and at least one outlet opening connected to the air passage (48) in the region of the edge (26) such that compressed air flowing from the outlet forms an air cushion (40) extending around the edge (26).

12. A deflection element according to claim 11, comprising
wherein the two guide surfaces (24, 28) are so arranged in mutually angular relationship that the substrate and film are sharply deflected during movement over edge (26) causing the substrate (22) and film (34) to come into direct contact and adhere to each other preventing air inclusions.

13. A deflection element according to claim 11 or 12 **characterised in that** the edge (26) has a radius of curvature of less than 6 mm, in particular less than 4 mm, in particular less than 2mm.

14. A deflection element according to one of claims 11 to 13 **characterised in that** the included angle formed by the guide surfaces (24, 28) in the region surrounding the edge (26) is less than 120°, in particular 45° to 90°, in particular 55° to 75°.

15. A deflection element according to one of claims 11 to 14 **characterised in that** at least one guide surface (24, 28) has a camber in particular such that the camber has a radius of curvature of between 300 mm and 2000 mm.

16. A deflection element according to one of claims 11 to 15 **characterised in that** the edge (26) is formed by a bar (62) of a diameter of less than 8 mm. wherein the bar (62) is in particular rotatably mounted and is preferably at least also mounted through the air cushion (40).

17. A deflection element according to one of claims 11 to 16 **characterised in that** the guide surfaces (24, 28) are in the form of air cushion surfaces.

18. A deflection element according to one of claims 11 to 17 **characterised in that** the edge (26) is formed by a surface which is permeable for compressed air, in particular a mesh (56) or cloth element.

19. A deflection element according to one of claims 11 to 18 **characterised by** passages (56) extending in the interior for receiving cooling medium.

20. A deflection element according to one of claims 11 to 19 **characterised by** fishbone-shaped surface grooving (64) in the guide surfaces (24, 28).

21. A deflection element according to one of claims 11 to 20 **characterised by** a fine-mesh cloth (46) on the guide surfaces (24, 28).

22. Apparatus for applying a film to a planar, in particular air-impermeable substrate (22), comprising
a roller (14, 38) for feeding the planar substrate (22), and
an application head (16) for applying a film (34),
**characterised by** a deflection element (12) according to one of claims 15 to 26.

23. Apparatus according to claim 22 **characterised in that** the applicator device (16) is positioned from a minimum of 0 to 20 mm, in particular between 1 and 8 mm, before the edge (26) of the deflection element (12).

24. Apparatus according to one of claims 22 or 23 **characterised in that** the deflection element (12) is electrically insulated in relation to other and in particular all other elements of the apparatus and is chargeable by means of a voltage source (20) to an electrical potential of a value of at least 1 kV, preferably at least 5 kV, with respect to the other elements of the apparatus.

25. Apparatus according to one of claims 22 to 24 **characterised in that** a counterpart electrode (18) is arranged in the region around the deflection region (36) in such a way that the substrate web path extends between the deflection element (12) and the counterpart electrode (18) and is electrically insulated in relation to other and in particular all other elements of the apparatus and is chargeable by means of a voltage source (20) to an electrical potential of a value of at least 1 kV, preferably at least 5 kV, with respect to the other elements of the apparatus.

## Revendications

1. Procédé pour appliquer un film (34) sur un substrat plan (22), notamment imperméable à l'air, comprenant les étapes suivantes:
- amenée du substrat plan (22), dans une direction d'amenée, vers une tête d'application (16),
- application d'un film (34) délivré par la tête d'application (16) sur le substrat plan (22),
**caractérisé par**
- déviation très marquée du substrat plan avec le film (34) qui est en contact avec le substrat, dans une zone de déviation (36), dans une direction de transport différente de la direction d'amenée, de manière à ce que le rayon de courbure du substrat plan (22) soit inférieur à 8 mm sur le côté tourné vers le film (34) dans la zone de déviation (36),
- formation d'un coussin d'air (40), dans la zone de déviation (36), entre l'arrête (26) et le substrat plan (22) de manière à ce que le substrat plan (22) n'entre pas directement en contact avec l'arrête (26).

2. Procédé selon la revendication 1,
**caractérisé par le fait que** le rayon de courbure est inférieur à 6 mm, notamment inférieur à 4 mm, notamment inférieur à 2 mm.

3. Procédé selon l'une des revendications précédentes, **caractérisé par le fait que** la déviation très marquée du substrat plan (22) s'effectue en tirant le substrat sur une barre montée de manière rotative qui a un rayon correspondant au rayon de courbure.

4. Procédé selon l'une des revendications précédentes, **caractérisé par le fait que** la déviation très marquée du substrat plan (22) est obtenue en déplaçant le substrat plan (22) sur une arête (26) dans la zone de déviation (36) de manière à ce que le substrat (22) et le film (34) soient mis en contact direct et adhèrent l'un à l'autre.

5. Procédé selon la revendication 4,
**caractérisé par le fait que** la déviation très marquée du substrat (22) a pour effet de réduire les inclusions d'air entre le substrat (22) et le film (34).

6. Procédé selon l'une des revendications précédentes,
**caractérisé par le fait que** le film (34) est amené à un endroit à proximité immédiate du substrat plan (22), à une distance comprise entre 0 mm et 20 mm, notamment entre 1 mm et 10 mm, de la zone de déviation (36).

7. Procédé selon l'une des revendications précédentes,
**caractérisé par le fait que** le substrat plan est dévié de manière à ce que l'angle inclus formé entre la direction d'amenée et la direction de transport, au voisinage de la zone de déviation (36), soit compris entre 40° et 110°, notamment entre 50° et 80°, notamment entre 55° et 65°.

8. Procédé selon l'une des revendications précédentes,
**caractérisé par le fait que** le substrat plan (22) est d'abord guidé sur un rouleau-guide (38) de préférence refroidi, puis s'éloigne du rouleau-guide (38) pour être amené vers la tête d'application (16) le long d'un rouleau de déviation (14) qui a un plus petit diamètre que le rouleau-guide (38), et il est ramené sur le rouleau-guide (38) après la déviation.

9. Procédé selon l'une des revendications précédentes,
**caractérisé par le fait que** le substrat plan (22) est exposé, dans la zone de déviation (36), à un champ électrostatique qui présente une intensité de champ supérieure à 5 kV/m en au moins un endroit de la zone de déviation (36).

10. Procédé selon l'une des revendications précédentes,
**caractérisé par le fait que** le substrat plan (22) est refroidi dans la zone d'amenée et/ou zone de déviation.

11. Elément de déviation pour la déviation d'un film et d'un substrat, notamment d'un substrat plan (22) imperméable à l'air,
**caractérisé par** une première surface de guidage (24) exécutée pour guider un substrat plan et une seconde surface de guidage (28) qui, ensemble, forment une arête (26) pour la déviation très marquée du film (34) et du substrat plan, l'arête (26) présentant un rayon de courbure inférieur à 8 mm et
au moins un canal d'air comprimé (28) qui s'étend vers l'arête (26) à travers l'élément de déviation (12) et au moins une ouverture de sortie reliée au canal d'air comprimé (28) dans la zone de l'arête (26), de manière à ce que l'air comprimé s'écoulant de la sortie forme un coussin d'air (40) s'étendant autour de l'arête (26).

12. Elément de déviation selon la revendication 11,
les deux surfaces de guidage (24, 28) étant disposées de manière angulaire l'une par rapport à l'autre, de façon que le substrat et le film subissent une déviation très marquée pendant le déplacement du substrat le long de l'arête (26) et que, de cette manière, le substrat (22) et le film (34) entrent en contact direct et adhèrent l'un à l'autre sans inclusions d'air.

13. Elément de déviation selon la revendication 11 ou 12,
**caractérisé par le fait que** l'arête (26) présente un rayon de courbure de moins de 6 mm, notamment de moins de 4 m, notamment de moins de 2 mm.

14. Elément de déviation selon l'une des revendications 11 à 13,
**caractérisé par le fait que** l'angle inclus formé par les surfaces de guidage (24, 28) au voisinage de l'arête (26) est inférieur à 120°, est compris notamment entre 45° et 90°, notamment entre 55° et 75°.

15. Elément de déviation selon l'une des revendications 11 à 14,
**caractérisé par le fait qu'**au moins une surface de guidage (24, 28) est pourvue d'un bombement, notamment de manière à ce que le bombement présente un rayon de courbure compris entre 300 mm et 2 000 mm.

16. Elément de déviation selon l'une des revendications 11 à 15,
**caractérisé par le fait que** l'arête (26) est formée par une barre (62) de diamètre inférieur à 8 mm, la barre étant montée notamment de manière rotative et, de préférence, également supportée au moins par le coussin d'air (40).

17. Elément de déviation selon l'une des revendications 1 à 16,
**caractérisé par le fait que** les surfaces de guidage (24, 28) sont exécutées en tant que surfaces de coussin d'air.

18. Elément de déviation selon l'une des revendications 11 à 17,
**caractérisé par le fait que** l'arête (26) est formée par une surface perméable à l'air comprimé, notamment un tamis (56) ou élément en tissu.

19. Elément de déviation selon l'une des revendications 11 à 18,
**caractérisé par** des canaux (52) s'étendant à l'intérieur, destinés à recevoir un liquide de refroidissement.

20. Elément de déviation selon l'une des revendications 11 à 19,
**caractérisé par** un striage superficiel en forme d'arêtes de poisson (64) des surfaces de guidage (24, 28).

21. Elément de déviation selon l'une des revendications 11 à 20,
**caractérisé par** un tissu à mailles fines (46) sur les surfaces de guidage (24, 28).

22. Dispositif pour l'application d'un film sur un substrat plan (22), notamment imperméable à l'air, comprenant
un élément d'amenée (38) comprenant des rouleaux de déviation (12, 14) pour amener le substrat plan (22) et
une tête d'application (16) pour l'application d'un film (34),
**caractérisé par** un élément de déviation (12) selon l'une des revendications 11 à 20.

23. Dispositif selon la revendication 22,
**caractérisé par le fait que** la tête d'application (16) est située à une distance minimale de l'ouverture de distribution (32) comprise entre 0 mm et 20 mm, notamment entre 1 mm et 8 mm, et avant l'arête (26) de l'élément de déviation (12).

24. Dispositif selon l'une des revendications 22 ou 23,
**caractérisé par le fait que** l'élément de déviation (12) est isolé électriquement par rapport aux autres, notamment tous les autres, éléments du dispositif et peut être chargé au moyen d'une source de tension (20) pour obtenir un potentiel électrique d'une valeur d'au moins 1 kV, de préférence au moins 5 kV, par rapport aux autres éléments du dispositif.

25. Dispositif selon l'une des revendications 22 ou 24,
**caractérisé par le fait qu'**une contre-électrode (18) est située au voisinage de la zone de déviation (36) de manière à ce que le trajet de la bande de substrat passe entre l'élément de déviation (12) et la contre-électrode (18), et est isolée électriquement par rapport à d'autres, et notamment tous les autres, éléments du dispositif, et peut être chargée au moyen d'une source de tension (20) pour obtenir un potentiel électrique d'une valeur d'au moins 1 kV, de préférence au moins 5 kV, par rapport aux autres éléments du dispositif.
